Europäisches Patentamt

European Patent Office

Office européen des brevets

(19)

(11) Veröffentlichungsnummer: **0 176 016**
**B1**

(12)

# EUROPÄISCHE PATENTSCHRIFT

(45) Veröffentlichungstag der Patentschrift:
**11.05.88**

(21) Anmeldenummer: **85111644.2**

(22) Anmeldetag: **14.09.85**

(51) Int. Cl.⁴: **A 61 C 13/34**, A 61 C 3/02

(54) Verfahren zur Bearbeitung von Arbeitsmodellen für prothetischen Zahnersatz.

(30) Priorität: **18.09.84 DE 3434153**

(43) Veröffentlichungstag der Anmeldung:
**02.04.86 Patentblatt 86/14**

(45) Bekanntmachung des Hinweises auf die Patenterteilung:
**11.05.88 Patentblatt 88/19**

(84) Benannte Vertragsstaaten:
**AT BE CH DE FR GB IT LI LU NL SE**

(56) Entgegenhaltungen:
**DE - A - 2 705 768**
**DE - A - 3 012 057**
**DE - B - 1 255 857**
**US - A - 3 896 548**

(73) Patentinhaber: **Staude, Aribo, Falkenstrasse 18,
D-7053 Kernen (DE)**

(72) Erfinder: **Staude, Aribo, Falkenstrasse 18,
D-7053 Kernen (DE)**

(74) Vertreter: **Hoeger, Stellrecht & Partner,
Uhlandstrasse 14c, D-7000 Stuttgart 1 (DE)**

## Beschreibung

Die Erfindung betrifft ein Verfahren zur Bearbeitung von Arbeitsmodellen für prothetischen Zahnersatz, die einen Zahnkranz und einen Sockel umfassen, wobei der Zahnkranz mit seiner Unterseite auf den Sockel aufgesetzt wird und Verankerungsstifte, insbesondere sogenannte Dowel-Pins, die aus der Unterseite des Zahnkranzes herausragen, in den Sockel eintauchen, bei dem ein dem Zahnkranz gegenüberliegender Sockelboden bis zum Sichtbarwerden der Verankerungsstifte abgetragen wird und danach die Verankerungsstifte am Sockelboden freigelegt werden.

Bei früheren Verfahren, beschrieben z.B. in der DE-A-27 05 768, wurde der Zahnkranz, der aus superhartem Gips hergestellt ist und ein Modell von Zähnen einschliesslich Zahnstümpfen und einer Kieferpartie bildet, nachdem auf der Unterseite Verankerungsstifte angebracht worden sind, in einen Sockel aus Gips oder Kunststoff eingegossen. Als Verankerungsstifte kommen vorzugsweise konische Messingstifte, die in Längsrichtung angeschliffen sind, zum Einsatz, die in den Zahnkranz von unten her eingeklebt sind. In den Zahnkranz werden Schnitte gesetzt, die einzelne Zähne bzw. Zahnstümpfe aus dem Zahnkranz trennen. Die Sockelunterseite oder der Sockelboden wird plangeschliffen, so dass die Verankerungsstifte bzw. die Messingstifte an der Sockelunterseite sichtbar werden.

Bevor nun die einzelnen Zähne bzw. Zahnstümpfe, die durch die Schnitte von dem Zahnkranz abgetrennt wurden, aus dem Sockel herausgenommen werden können, müssen die Verankerungsstifte an der Sockelunterseite teilweise freigelegt werden. Dies wurde bisher durch mehrfaches Anbohren der Sockelunterseite rings um die Verankerungsstifte herum durchgeführt. Ist der Verankerungsstift oder der Messingstift freigelegt, kann der Verankerungsstift samt dem Zahn bzw. Zahnstumpf nach oben aus dem Sockel herausgedrückt werden.

Da beim späteren Einpassen des Arbeitsmodells in den Artikulator, bei dem die Arbeitsmodelle in richtiger Bissstellung fixiert werden, mehrmals die Sockelunterseite nachgeschliffen werden muss, ist es sehr häufig nötig, denselben Verankerungsstift an der Sockelunterseite mehrfach freizulegen.

Aufgabe der Erfindung ist es, ein Verfahren zum Freilegen der Verankerungsstifte zu schaffen, das diesen häufig vorkommenden Arbeitsprozess vereinfacht, und eine schnelle Durchführung desselben erlaubt.

Diese Aufgabe wird bei einem Verfahren der eingangs beschriebenen Art erfindungsgemäss dadurch gelöst, dass um die Verankerungsstifte herum am Sockelboden durch ein Fräswerkzeug in jeweils einem Arbeitsgang das die Stifte umgebende Material entfernt wird, wobei das Fräswerkzeug so am Sockelboden angesetzt wird, dass der Verankerungsstift in eine zentrale, stirnseitige Öffnung des Fräsers eindringt und der Fräser durch den Stift geführt wird.

In der DE-B-12 55 857 ist zwar ein Fräser beschrieben, welcher ein stirnseitiges Sackloch aufweist. Dieses Sackloch dient lediglich dazu, eine Luftströmung von unten in dieses Sackloch und von diesem Sackloch über seitlich im Mantel des Fräsers angeordnete Schlitze nach aussen zuzulassen, die ein Verstopfen von Schneiden dieses Fräsers verhindern soll. Gemäss der Beschreibung in dieser Druckschrift wird dieser Fräser primär so eingesetzt, dass ein Materialabtrag mit den seitlich am Mantel angeordneten, luftdurchströmten Schneiden erfolgt.

Ein derartiger Fräser ist zum einen nicht primär als Stirnfräser ausgebildet und hat aufgrund seiner zylindrischen Bohrung den Nachteil, dass sich bei der Verwendung dieses Fräsers zum erfindungsgemässen Verfahren der Verankerungsstift in dem zylindrischen Sackloch verklemmen könnte.

Es ist daher eine weitere Aufgabe der Erfindung, ein Werkzeug zur Durchführung des oben beschriebenen Verfahrens zu schaffen.

Diese Aufgabe wird bei einem Werkzeug zur Durchführung des Verfahrens der oben beschriebenen Art erfindungsgemäss dadurch gelöst, dass das Werkzeug ein Stirnfräser ist, an dem stirnseitig, koaxial zur Rotationsachse des Fräsers eine Öffnung in Form eines Sacklochs angebracht ist, dass das Sackloch zum Fräserschaft hin konisch ausgebildet ist und eine Aufnahme für den Verankerungsstift bei dessen Freilegen bildet.

Mit diesem Werkzeug kann in vorteilhafter Weise durch ein einmaliges Ansetzen des Fräsers der Verankerungsstift eines Zahnes bzw. Zahnstumpfes freigelegt werden. Durch das an den Fräser stirnseitig angebrachte Sackloch, das vorteilhaft zum Werkzeugschaft hin konisch ausgebildet ist, wird der Fräser durch den Verankerungsstift geführt, der freigelegt werden soll. Das Sackloch wird so dimensioniert, dass alle üblichen Grössen der Verankerungsstifte oder der Dowel-Pins mit einem einzigen Fräser freigelegt werden können.

Vorzugsweise weist der Stirnfräser einen zylindrischen Fräskopf auf.

Eine vorteilhafte Ausführungsform des Stirnfräsers besitzt eine nach aussen gewölbte Stirnseite und Fräserschneiden, die sich an der Aussenwandung des Fräskopfes in einem spitzen Winkel zur Rotationsachse des Fräsers in Richtung zum Fräserschaft fortsetzen.

Bei einer besonders bevorzugten Ausführungsform der Erfindung führen vom geschlossenen Ende des Sackloches durchgehende Öffnungen bis zur Aussenwandung des Fräsers. Durch diese durchgehenden Öffnungen kann in dem Sackloch anfallender Gipsstaub nach aussen abtransportiert werden, so dass das Sackloch nicht verstopft. Zweckmässigerweise bilden die Längsachsen der durchgehenden Öffnungen mit der Rotationsachse des Fräsers in Richtung zum Fräserschaft einen Winkel, der kleiner als 90° ist.

Durch diese besondere Formgebung des Fräserkopfes entstehen beim Fräsen um die Verankerungsstifte herum im Sockel ungefähr halbkugelförmige Einbuchtungen, in deren Mitte der Verankerungsstift freigelegt ist. Der Verankerungsstift kann nun mit einem Instrument oder einer Fingerkuppe zusammen mit dem Zahn bzw. Zahnstumpf nach oben aus dem Sockel herausgedrückt werden.

Diese und weitere Vorteile der Erfindung werden im folgenden anhand der Zeichnung noch näher erläutert.

Es zeigen:

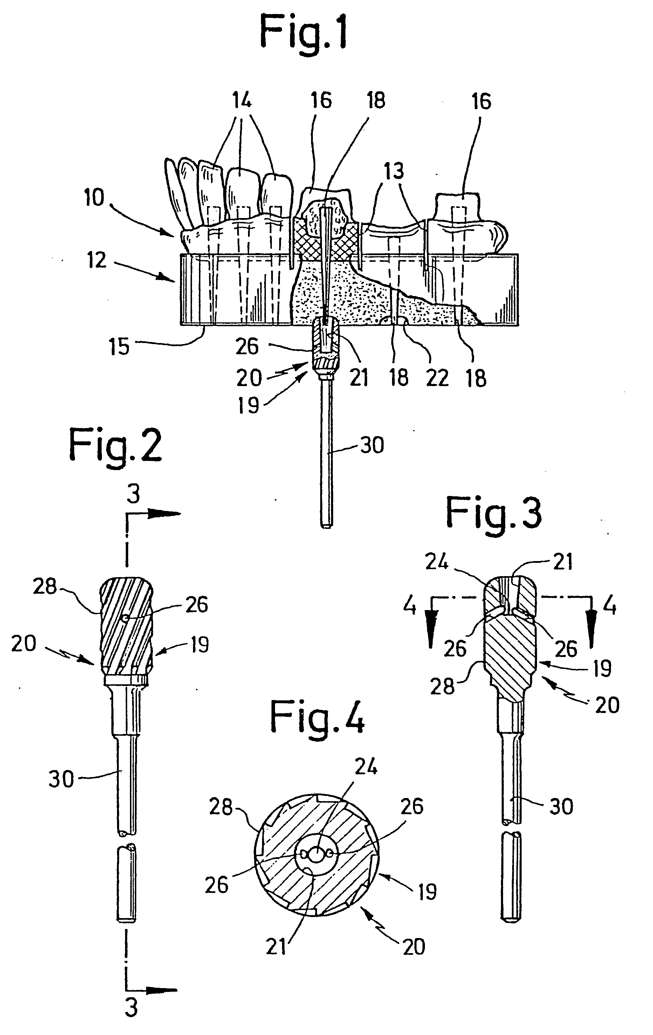

Fig. 1 eine Seitenansicht eines aufgebrochen dargestellten Arbeitsmodells;

Fig. 2 Ansicht eines erfindungsgemässen Fräsers;

Fig. 3 Schnittansicht entlang der Linie 3-3 in Fig. 2 und

Fig. 4 Schnittansicht längs der Linie 4-4 in Fig. 3.

Ein Arbeitsmodell für einen prothetischen Zahnersatz umfasst einen sogenannten Zahnkranz 10 aus superhartem Gips und einen Sockel 12, der aus Gips oder Kunststoff gefertigt ist. Im Zahnkranz 10 werden Verankerungsstifte 18, beispielsweise durch Verkleben, befestigt, wobei die Verankerungsstifte 18, insbesondere sogenannte Dowel-Pins sind, die aus der Unterseite des Zahnkranzes 10 herausragen. Der Zahnkranz 10 wird mit seiner Unterseite und den Verankerungsstiften 18 auf dem Sockel 12, beispielsweise durch Eingiessen, befestigt. Durch Trennschnitte 13 werden Zähne 14 bzw. Zahnstümpfe 16 aus dem Verband des Zahnkranzes 10 herausgetrennt. Im Verlauf der weiteren Bearbeitung des Arbeitsmodells wird ein dem Zahnkranz gegenüberliegender Sockelboden 15 so weit abgetragen oder abgeschliffen, bis die Verankerungsstifte 18 am Sockelboden 15 sichtbar werden. Danach wird erfindungsgemäss ein Stirnfräser 20, der stirnseitig koaxial zur Rotationsachse des Fräsers ein Sackloch 21 aufweist, konzentrisch mit dem Verankerungsstift 18 am Sockelboden 15 angesetzt und in einem Arbeitsgang eine Einbuchtung 22 in den Sockelboden 15 eingefräst.

Vorzugsweise wird das Sackloch konisch ausgebildet, komplementär zur konischen Form der Verankerungsstifte 18.

Der Verankerungsstift 18 ist jetzt in der Einbuchtung 22 frei zugänglich und kann mitsamt dem daran befestigten Zahn bzw. Zahnstumpf mit einem Instrument oder einer Fingerkuppe aus dem Sockel nach oben herausgehoben werden. Durch die Verwendung von Verankerungsstiften 18 mit unrundem Querschnitt kann der Zahn 14 bzw. der Zahnstumpf 16 wieder mit exakt der gleichen Orientierung in den Sockel eingesetzt werden.

Im Verlauf der Arbeiten an dem Modell ist es häufiger nötig, insbesondere beim Einpassen des Arbeitsmodells in einen Artikulator, in dem die Arbeitsmodelle in richtiger Bissstellung fixiert werden, dass der Sockelboden 15 mehrfach abgetragen wird. Dabei verschwinden die vorher eingebrachten Einbuchtungen 22, so dass sie vor einer weiteren Bearbeitung erneut in den Sockelboden 15 eingefräst werden müssen. Hier wird deutlich, welch grosse Zeitersparnis und Arbeitsvereinfachung mit dem erfindungsgemässen Verfahren und dem dabei eingesetzten erfindungsgemässen Stirnfräser erzielt werden.

Um ein Verstopfen des Sacklochs 21 durch Gipsstaub zu verhindern, werden bei besonders bevorzugten Ausführungsformen des Fräsers vom geschlossenen Ende 24 des Sacklochs 21 bis zur Aussenwandung 28 des Fräsers durchgehende Öffnungen 26 angebracht. Die Längsachsen dieser durchgehenden Öffnungen bilden mit der Rotationsachse des Fräsers in Richtung zum Fräserschaft 30 vorzugsweise einen Winkel von kleiner als 90°. Diese Öffnungen sorgen für einen Abtransport des in dem Sackloch 21 anfallenden Gipsstaubs, so dass die Funktionsfähigkeit des Werkzeugs auch nach mehreren Arbeitsgängen erhalten bleibt.

**Patentansprüche**

1. Verfahren zur Bearbeitung von Arbeitsmodellen für prothetischen Zahnersatz, die einen Zahnkranz (10) und einen Sockel (12) umfassen, wobei der Zahnkranz mit seiner Unterseite auf den Sockel aufgesetzt wird und Verankerungsstifte (18), die aus der Unterseite des Zahnkranzes herausragen, in den Sockel eintauchen, bei dem ein dem Zahnkranz gegenüberliegender Sockelboden (15) bis zum Sichtbarwerden der Verankerungsstifte abgetragen wird und danach die Verankerungsstifte am Sockelboden freigelegt werden, dadurch gekennzeichnet, dass um die Verankerungsstifte (18) herum am Sockelboden (15) durch ein Fräswerkzeug (20) in jeweils einem Arbeitsgang das die Stifte (18) umgebende Material entfernt wird, wobei das Fräswerkzeug (20) so am Sockelboden angesetzt wird, dass der Verankerungsstift in eine zentrale, stirnseitige Öffnung (21) des Fräsers eindringt und das Fräswerkzeug durch den Stift geführt wird.

2. Werkzeug zur Bearbeitung von Arbeitsmodellen für prothetischen Zahnersatz, die einen Zahnkranz (10) und einen Sockel (12) umfassen, wobei der Zahnkranz mit seiner Unterseite auf dem Sockel aufgesetzt wird und Verankerungsstifte (18), die aus der Unterseite des Zahnkranzes herausragen, in den Sockel eintauchen, wobei ein dem Zahnkranz gegenüberliegender Sockelboden (15) bis zum Sichtbarwerden der Verankerungsstifte abgetragen wird und danach die Verankerungsstifte am Sockelboden freigelegt werden, und wobei das Werkzeug ein Stirnfräser (20) ist, an dem stirnseitig, koaxial zur Rotationsachse des Fräsers eine Öffnung in Form eines Sacklochs (21) angebracht ist, dadurch gekennzeichnet, dass das Sackloch (21) zum Fräserschaft (30) hin konisch ausgebildet ist und eine Aufnahme für den Verankerungsstift bei dessen Freilegen bildet.

3. Werkzeug nach Anspruch 2, dadurch gekennzeichnet, dass der Stirnfräser (20) einen zylindrischen Fräskopf (19) aufweist.

4. Werkzeug nach Anspruch 2 oder 3, dadurch gekennzeichnet, dass die Stirnseite des Fräsers (20) nach aussen gewölbt ist und sich Fräserschneiden an der Aussenwandung (28) des Fräskopfs (19) in spitzen Winkeln zur Rotationsachse des Fräsers in Richtung zum Fräserschaft (30) fortsetzen.

5. Werkzeug nach einem der Ansprüche 2 bis 4, dadurch gekennzeichnet, dass vom geschlossenen Ende (24) des Sacklochs (21) durchgehende Öffnungen (26) bis zur Aussenwandung (28) des Fräskopfs (19) führen.

6. Werkzeug nach Anspruch 5, dadurch gekennzeichnet, dass die Längsachsen der durchgehenden Öffnungen (26) mit der Rotationsachse des Fräsers (20) in Richtung zum Fräserschaft (30) einen Winkel von weniger als 90° bilden.

## Claims

1. A method of machining working models for a dental prosthesis comprising a dental cast (10) and a base (12), the dental cast being placed on the base with its lower side, and anchoring pins (18) projecting from the lower side of the dental cast so as to penetrate the base, wherein a base underside (15) located on the opposite side to the dental cast is cut away until the anchoring pins become visible and the anchoring pins are then made freely accessible on the base underside, characterized in that the material surrounding the anchoring pins (18) on the base underside (15) is removed from around each respective pin (18) in one operating step by a milling tool (20), said milling tool (20) hereby being placed against the underside of the base such that the anchoring pin penetrates a central opening (21) in the end of the milling tool and the milling tool is guided by the pin.

2. Tool for machining working models of a dental prosthesis comprising a dental cast (10) and a base (12), the dental cast being placed on the base with its lower side, and anchoring pins (18) projecting from the lower side of the dental cast so as to penetrate the base, wherein a base underside (15) located on the opposite side to the dental cast is cut away until the anchoring pins become visible and the anchoring pins are then made freely accessible on the base underside and wherein the tool is an end-milling tool (20) comprising an opening in the form of a blind-end bore (21) provided in its end face coaxially to the axis of rotation of the milling tool, characterized in that the blind-end bore (21) is conically shaped towards the shank (30) of the milling tool and forms a receiving means for the anchoring pin when said pin is exposed.

3. Tool as defined in claim 2, characterized in that the end-milling tool (20) has a cylindrical milling head (19).

4. Tool as defined in claims 2 or 3, characterized in that the end face of the milling tool (20) is curved outwards and milling edges continue along the outer wall (28) of the milling head (19) at acute angles to the axis of rotation of the milling tool in the direction of the milling tool shank (30).

5. Tool as defined in any of claims 2 to 4, characterized in that through openings (26) lead from the closed end (24) of the blind-end bore (21) to the outer wall (28) of the milling head (19).

6. Tool as defined in claim 5, characterized in that the longitudinal axes of the through openings (26) form an angle of less than 90° with the axis of rotation of the milling tool (20) in the direction of the milling tool shank (30).

## Revendications

1. Procédé d'usinage de modèles de travail pour prothèse dentaire qui comprennent une couronne de dents (10) et un socle (12), la couronne de dents étant, par sa face inférieure, montée sur le socle et des chevilles d'ancrage (18), qui font saillie de la face inférieure de la couronne de dents, plongeant dans le socle, procédé dans lequel un fond de socle (15), opposé à la couronne de dents, est soumis à un enlèvement de matière jusqu'à ce que les chevilles d'ancrage deviennent visibles, les chevilles d'ancrage étant ensuite dégagées sur le fond de socle, caractérisé en ce que la matière entourant les chevilles (18) est éliminée tout autour des chevilles d'ancrage (18) sur le fond de socle (15) par un outil de fraisage (20), chaque fois en une opération, l'outil de fraisage (20) étant appliqué sur le fond de socle de façon que la cheville d'ancrage pénètre dans une ouverture centrale, du côté frontal (21), de la fraise et que l'outil de fraise soit guidé par la cheville.

2. Outil d'usinage de modèles de travail pour prothèse dentaire, qui comprennent une couronne de dents (10) et un socle (12), la couronne de dents étant montée, par sa face inférieure, sur le socle et des chevilles d'ancrage (18), qui font saillie de la face inférieure de la couronne de dents, plongeant dans le socle, un fond de socle (15), opposé à la couronne de dents, étant soumis à un enlèvement de matière jusqu'à ce que les chevilles d'ancrage deviennent visibles, les chevilles d'ancrage étant ensuite dégagées sur le fond de socle, l'outil étant une fraise frontale (20), sur laquelle, du côté frontal, coaxialement à l'axe de rotation de la fraise, est agencée une ouverture en forme d'un trou borgne (21), caractérisé en ce que le trou borgne (21) est façonné sous une forme conique en direction de la tige de fraise (30) et en ce qu'il forme un logement pour la cheville d'ancrage au cours de son dégagement.

3. Outil suivant la revendication 2, caractérisé en ce que la fraise frontale (20) présente une tête de fraisage cylindrique (19).

4. Outil suivant l'une des revendications 2 et 3, caractérisé en ce que le côté frontal de la fraise (20) est bombé vers l'extérieur et en ce que des tranchants de fraise se prolongent sur la paroi externe (28) de la tête de fraisage (19) en formant des angles aigus par rapport à l'axe de rotation de la fraise, en direction de la tige de fraise (30).

5. Outil suivant l'une des revendications 2 à 4, caractérisé en ce que des ouvertures de passage (26) vont de l'extrémité fermée (24) du trou borgne (21) jusqu'à la paroi externe (28) de la tête de fraisage (19).

6. Outil suivant la revendication 5, caractérisé en ce que les axes longitudinaux des ouvertures de passage (26) forment, avec l'axe de rotation de la fraise (20), un angle inférieur à 90°, en direction de la tige de fraisage (30).

# Fig.1

# Fig.2

# Fig.3

# Fig.4